# EUROPÄISCHE PATENTSCHRIFT

(11) **EP 0 775 893 B1**
(45) Veröffentlichungstag und Bekanntmachung des Hinweises auf die Patenterteilung: **31.05.2000**
(21) Anmeldenummer: 97102516.8
(22) Anmeldetag: 30.06.1993
(51) Int. Cl.: G01F 1/84, G01F 15/02

(54) **Massendurchflussmessgerät**
Mass flowrate measuring device
Dispositif de mesure du débit massique

(30) Priorität: 06.07.1992 DE 4222095; 24.07.1992 DE 4224379
(43) Veröffentlichungstag der Anmeldung: 28.05.1997
(62) Teilanmeldung aus: 93110411.1
(73) Patentinhaber: KROHNE MESSTECHNIK GMBH & CO. KG, D-47058 Duisburg (DE)
(72) Erfinder: van der Pol, Ronald, Dipl.-Ing., 5924 AK Venlo (NL)
(74) Vertreter: Schüll, Gottfried Hubert

(56) Entgegenhaltungen:
- EP-A- 0 261 435
- US-A- 4 607 435
- US-A- 4 984 472

## Beschreibung

Die Erfindung betrifft ein Massendurchflußmeßgerät für strömende Medien, das nach dem Coriolis-Prinzip arbeitet, mit mindestens einem das strömende Medium führenden geraden Meßrohr, mit mindestens einem auf das Meßrohr einwirkenden Schwingungserzeuger, mit mindestens einem Coriolis-Kräfte und/oder auf Coriolis-Kräften beruhende Coriolis-Schwingungen erfassenden Meßwertsensor und mit einem das Meßrohr, den Schwingungserzeuger und den Meßwertsensor aufnehmenden Tragrohr, wobei das Meßrohr und das Tragrohr in einer axiale Relativbewegungen ausschließenden Weise miteinander verbunden sind und der axiale Abstand der Verbindungsstellen Meßrohr/Tragrohr die Schwingungslänge des Meßrohres darstellt.

Das beschriebene Massendurchflußmeßgerät ist aus der DE-OS 41 24 295 bekannt.

Massendurchflußmeßgeräte für strömende Medien, die nach dem Coriolis-Prinzip arbeiten, sind in verschiedenen Ausführungen bekannt (vgl. z. B. die DE-OSen 26 29 833, 28 22 087, 28 33 037, 29 38 498, 30 07 361, 33 29 544, 34 43 234, 35 03 841, 35 05 166, 35 26 297, 36 32 800, 37 07 777, 39 16 285, 40 16 907, 41 24 295, 41 24 296 und 41 29 181, die EP-OSen 0 083 144, 0 109 218, 0 119 638, 0 196 150, 0 210 308, 0 212 782, 0 235 274, 0 239 679, 0 243 468, 0 244 692, 0 261 435, 0 271 605, 0 275 367 und 0 282 552 sowie die US-PSen 4,491,009, 4,628,744 und 4,666,421) und finden in zunehmendem Maße in der Praxis Verwendung.

Bei Massendurchflußmeßgeräten für strömende Medien, die nach dem Coriolis-Prinzip arbeiten, unterscheidet man grundsätzlich zwischen einerseits solchen, deren Meßrohr zumindest im wesentlichen gerade ausgeführt ist, und andererseits solchen, deren Meßrohr schleifenförmig ausgeführt ist. Außerdem unterscheidet man bei den in Rede stehenden Massendurchflußmeßgeräten zwischen einerseits solchen, die nur ein Meßrohr aufweisen, und andererseits solchen, die zwei Meßrohre aufweisen; bei den Ausführungsformen mit zwei Meßrohren können diese strömungstechnisch in Reihe oder parallel zueinander liegen.

Ausführungsformen von Massendurchflußmeßgeräten, bei denen das Meßrohr gerade ausgeführt ist bzw. die Meßrohre gerade ausgeführt sind, sind in bezug auf den mechanischen Aufbau einfach und folglich mit relativ geringen Kosten herzustellen.

Dabei sind auch die Meßrohrinnenflächen gut bearbeitbar, z. B. polierbar. Im übrigen haben sie einen geringen Druckverlust.

Nachteilig ist bei Massendurchflußmeßgeräten, die nach dem Coriolis-Prinzip arbeiten und bei denen das Meßrohr gerade ausgeführt ist bzw. die Meßrohre gerade ausgeführt sind, daß sowohl thermisch bedingte Längenänderungen bzw. thermisch bedingte Spannungen als auch von außen einwirkende Kräfte und Momente zu Meßfehlern und zu mechanischen Schäden, nämlich zu Spannungsrissen, führen können.

Mit den bei nach dem Coriolis-Prinzip arbeitenden Massendurchflußmeßgeräten durch Temperaturänderungen auftretenden Meßfehlern hat sich die Fachwelt bereits beschäftigt.

Zunächst ist schon erkannt worden, daß die Temperaturabhängigkeit des E-Moduls die Schwingungsfrequenz und die Nachgiebigkeit des Meßrohrs und damit den Meßwert beeinflußt; daraus resultiert die Maßnahme, einen die Temperatur des Meßrohrs erfassenden Temperatursensor zur meßrohrtemperaturabhängigen Korrektur des Meßwerts vorzusehen (vgl. in der Literaturstelle "messen prüfen automatisieren", 1987, Seiten 301 bis 305, den Aufsatz "DIREKTE MASSENDURCHFLUSSMESSUNG, INSBESONDERE MIT CORIOLISVERFAHREN" von W. Steffen und Dr. W. Stumm).

Im übrigen sind auch Massendurchflußmeßgeräte bekannt, bei denen auch bereits die weitergehende Temperaturabhängigkeit des Meßwerts dadurch berücksichtigt worden ist, daß ein die Temperatur des Tragrohrs erfassender Temperatursensor zur tragrohrtemperaturabhängigen Korrektur des Meßwerts vorgesehen ist (vgl. die DE-OS 36 32 800, die US 4,984,472 und die EP-OS 0 261 435). Dabei werden z. B. von zwei Temperatursensoren erzeugte Temperatursensorsignale in eine Korrekturschaltung gegeben, die den Temperatureinfluß auf den Meßwert beseitigen soll. Im einzelnen ist dabei vorgesehen, daß die Korrekturschaltung den Meßwert mit einem Korrekturfaktor *K* = *K*₀ + *K*₁ *T*₁ + *K*₂*T*₂ + *K*₃*T*₁² + *K*₄*T*₂² + *K*₅*T*₁*T*₂ multipliziert, wobei *T*₁ die Temperatur des Meßrohrs, *T*₂ die Temperatur des Tragrohrs sowie *K*₀, *K*₁, *K*₂, *K*₃, *K*₄ und *K*₅ konstante Koeffizienten sind, die für eine bestimmte Ausführungsform des Massendurchflußmeßgeräts spezifisch sind. In der Praxis soll sich gezeigt haben, daß die Glieder höherer Ordnung vernachlässigbar sind, so daß eine Temperaturkompensation ausreichender Genauigkeit erzielt werden soll, wenn der unkorrigierte Meßwert mit dem Korrekturfaktor *K* = *K*₀ + *K*₁*T*₁ + *K*₂*T*₂ multipliziert wird. Bei dem zuvor beschriebenen bekannten Massendurchflußmeßgerät werden zwar die Temperaturen des Meßrohrs und des Tragrohrs - gleichsam als äußere Ursachen für einen temperaturabhängigen Meßfehler - korrigierend berücksichtigt; die aus diesen äußeren Ursachen resultierenden inneren Ursachen sind jedoch nicht angesprochen.

Schließlich ist ein nach dem Coriolis-Prinzip arbeitendes Massendurchflußmeßgerät bekannt, das, wie das Massendurchflußmeßgerät, von dem die Erfindung ausgeht, ein das strömende Medium führendes gerades Meßrohr, einen auf das Meßrohr einwirkenden Schwingungserzeuger, zwei auf Coriolis-Kräften beruhende Coriolis-Schwingungen erfassende Meßwertsensoren und ein das Meßrohr, den Schwingungserzeuger und die Meßwertsensoren aufnehmendes Tragrohr aufweist, bei dem jedoch ein die Temperatur des Meßrohrs erfassender Temperatursensor nicht vorgesehen ist, bei dem vielmehr in anderer Weise dafür gesorgt ist, daß der Meßwert weitgehend temperaturunabhängig ist, Temperaturänderungen also nicht in erheblichem Maße zu Meßfehlern führen (vgl. die DE-OS 41 24 295). Bei diesem Massendurchflußmeßgerät ist das Tragrohr als sog. Kompensationszylinder ausgeführt, durch den bzw. in Verbindung mit dem Temperaturänderungen - sowie von außen einwirkende Kräfte und Momente kompensiert bzw. in ihren Auswirkungen zumindest weitgehend eliminiert werden. Die Baueinheit aus dem Meßrohr und dem als Kompensationszylinder ausgeführten Tragrohr ist gleichsam "immun" gegen Temperaturänderungen sowie gegen von außen einwirkende Kräfte und Momente. Dabei sind ergänzende Maßnahmen zur "Immunisierung" gegen Temperaturänderungen sowie gegen von außen einwirkende Kräfte und Momente realisiert. Eine erste ergänzende Maßnahme dieser Art besteht darin, daß das Meßrohr mit Zug-Vorspannung innerhalb des Tragrohrs angeordnet ist. Mit zunehmender Temperatur wird dann die Zug-Vorspannung abgebaut. Eine zweite ergänzende Maßnahme zur "Immunisierung" besteht darin, für das Meßrohr und das Tragrohr Werkstoffe mit gleichem oder nahezu gleichem Wärmeausdehnungskoeffizienten zu verwenden, insbesondere Werkstoffe mit relativ geringem Wärmeausdehnungskoeffizienten zu verwenden.

Ausgehend von dem zuvor im einzelnen erläuterten Stand der Technik liegt der Erfindung nun die Aufgabe zugrunde, das eingangs beschriebene Massendurchflußmeßgerät so auszugestalten und weiterzubilden, daß der Meßwert in einfacher Weise besonders weitgehend von Temperaturänderungen und von von außen einwirkenden Kräften unabhängig ist.

Das erfindungsgemäße Massendurchflußmeßgerät, bei dem die zuvor hergeleitete und dargelegte Aufgabe gelöst ist, ist nun zunächst und im wesentlichen dadurch gekennzeichnet, daß zur meßtemperaturabhängigen Korrektur des Meßwerts an beiden Enden des Meßrohrs oder an beiden mit dem Meßrohr verbundenen Anschlußrohren jeweils ein - vorzugsweise als temperaturabhängiger Widerstäand ausgeführter - Temperatursensor vorgesehen ist und die beiden Temperatursensoren in Reihe geschaltet sind.

Durch die erfindungsgemäße Ausgestaltung des Massendurchflußmeßgerätes ist gewährleistet, daß für die Verarbeitung der von beiden Temperatursensoren erzeugten Temperatursignale nur insgesamt zwei externe Anschlüsse benötigt werden. Durch die erfindungsgemäße Anordnung ist erreicht, daß dann, wenn die Temperatur am Anfang des Meßrohrs unterschiedlich ist von der Temperatur am Ende des Meßrohrs, als Temperatur des Meßrohrs ein Mittelwert zur Verfügung steht.

Bei dem erfindungsgemäßen Massendurchflußmeßgerät werden einerseits Temperaturänderungen des Meßrohrs, andererseits Längenänderungen des Meßrohrs, und zwar Änderungen der Schwingungslänge des Meßrohrs, die den Meßwert beeinflussen, zur Korrektur des Meßwerts herangezogen. Damit werden sowohl auf Temperaturänderungen des Meßrohrs und des Tragrohrs beruhende Meßfehler als auch solche Meßfehler eliminiert, die aus von außen einwirkenden Kräften resultieren. Dem liegt folgendes zugrunde:

Bei Massendurchflußmeßgeräten der in Rede stehenden Art ist der - aus den Meßwertsensorsignalen durch eine Auswerteschaltung gewonnene - Meßwert vor allem auch abhängig von der Schwingungsfrequenz des Meßrohrs. Die Schwingungsfrequenz des Meßrohrs ist wiederum abhängig vom temperaturabhängigen E-Modul des Meßrohrs, von der schwingungswirksamen Länge, der sog. Schwingungslänge des Meßrohrs und vom axialen Spannungszustand des Meßrohrs; die Schwingungsfrequenz des Meßrohrs ist also nur indirekt abhängig von der Temperatur des Tragrohrs und von auf das Tragrohr von außen einwirkenden Kräften, nämlich nur insoweit, als dadurch die Schwingungslänge und/oder der axiale Spannungszustand des Meßrohrs verändert wird. Dadurch, daß bei dem erfindungsgemäßen Massendurchflußmeßgerät zunächst, wie auch im Stand der Technik, ein die Temperatur des Meßrohrs erfassender Temperatursensor zur meßrohrtemperaturabhängigen Korrektur des Meßwerts vorgesehen ist, kann der Einfluß der temperaturabhängigen Änderung des E-Moduls auf die Schwingungsfrequenz des Meßrohrs berücksichtigt und ein daraus resultierender Meßfehler praktisch vollständig eliminiert werden. Dadurch, daß zusätzlich zu den erfindungsgemäß dem die Temperatur des Meßrohrs erfassenden Temperatursensoren ein Änderungen der Schwingungslänge des Meßrohrs erfassender Längenänderungssensor vorgesehen ist, können die Schwingungsfrequenz des Meßrohrs beeinflussende Änderungen der Schwingungslänge und des axialen Spannungszustands des Meßrohrs berücksichtigt und daraus resultierende Meßfehler eliminiert werden, und zwar, was besonders wichtig ist, sowohl solche, die auf Temperaturänderungen des Meßrohrs und/oder des Tragrohrs beruhen, als auch solche, die auf Kräften beruhen, die von außen auf das Meßrohr und/oder auf das Tragrohr einwirken. Dabei sind vom Längenänderungssensor abgegebene Längenänderungssensorsignale - natürlich - ein direktes Maß für Änderungen der Schwingungslänge des Meßrohrs, unabhängig davon, worauf diese Änderungen beruhen, und ein indirektes Maß für Änderungen des axialen Spannungszustands des Meßrohrs, wiederum unabhängig davon, worauf diese Änderungen beruhen. Daß aus einer Änderung der Schwingungslänge des Meßrohrs auch eine Änderung des axialen Spannungszustands des Meßrohrs bestimmt werden kann, resultiert daraus, daß eine Änderung des axialen Spannungszustands des Meßrohrs linear abhängig ist von einer Änderung der Schwingungslänge des Meßrohrs. Der Änderungen der Schwingungslänge des Meßrohrs erfassende Längenänderungssensor gibt also die Möglichkeit, Änderungen der Schwingungslänge des Meßrohrs und Änderungen des axialen Spannungszustands des Meßrohrs - und damit darauf beruhende Meßfehler - bei der Bestimmung des Meßwerts praktisch vollständig zu eliminieren. Die bei dem erfindungsgemäßen Massendurchflußmeßgerät verwirklichten Maßnahmen führen also dazu, daß alle die Schwingungsfrequenz des Meßrohrs ändernden Einflüsse berücksichtigt und damit alle daraus resultierenden Meßfehler praktisch vollkommen eliminiert werden können.

Im einzelnen gibt es nun eine Vielzahl von Möglichkeiten, das erfindungsgemäße Massendurchflußmeßgerät auszugestalten und weiterzubilden. Dazu wird verwiesen einerseits auf die dem Patentanspruch 1 nachgeordneten Patentansprüche, andererseits auf die Beschreibung von bevorzugten Ausführungsbeispielen in Verbindung mit der Zeichnung. In der Zeichnung zeigt
- Fig. 1: einen Längsschnitt durch ein erstes Ausführungsbeispiel eines erfindungsgemäßen Massendurchflußmeßgeräts,
- Fig. 2: einen Längsschnitt durch ein zweites Ausführungsbeispiel eines erfindungsgemäßen Massendurchflußmeßgeräts,
- Fig. 3: einen Längsschnitt durch ein drittes Ausführungsbeispiel eines erfindungsgemäßen Massendurchflußmeßgeräts,
- Fig. 4: in gegenüber der Fig. 3 vergrößerter Darstellung, den Ausschnitt A aus der Fig. 3,
- Fig. 5: einen Längsschnitt durch ein viertes Ausführungsbeispiel eines erfindungsgemäßen Massendurchflußmeßgeräts und
- Fig. 6: in gegenüber der Fig. 5 vergrößerter Darstellung, den Ausschnitt B aus der Fig. 5.

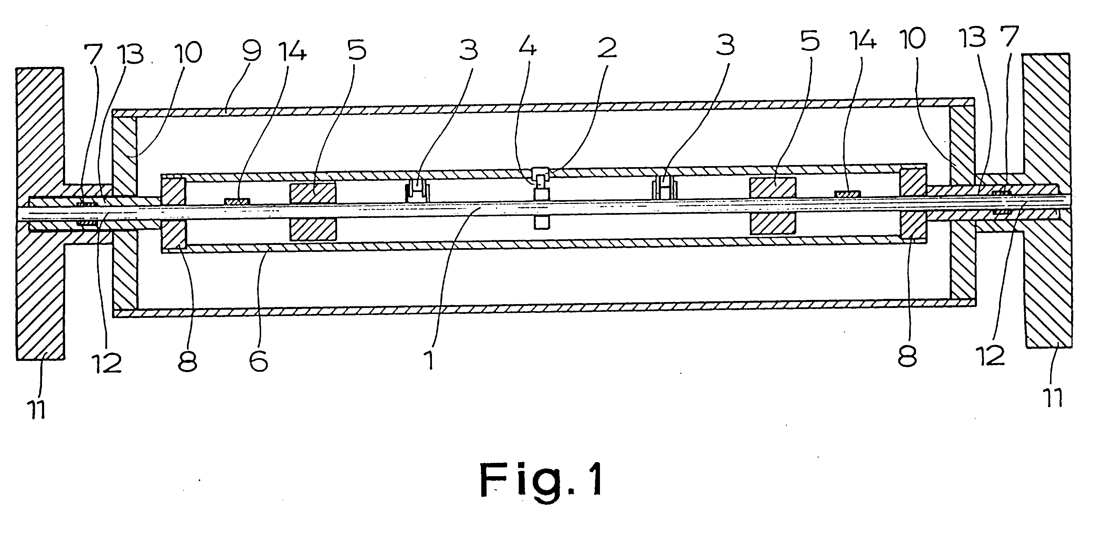

Bei dem erfindungsgemäßen Massendurchflußmeßgerät für strömende Medien handelt es sich um ein solches, das nach dem Coriolis-Prinzip arbeitet. Folglich gehören zu dem erfindungsgemäßen Massendurchflußmeßgerät ein das strömende Medium führendes gerades Meßrohr 1, ein auf das Meßrohr 1 einwirkender Schwingungserzeuger 2 und zwei Coriolis-Kräfte oder auf Coriolis-Kräften beruhende Coriolis-Schwingungen erfassende Meßwertsensoren 3. In den dargestellten Ausführungsbeispielen wirkt der Schwingungserzeuger 2 mit einem am Meßrohr 1 vorgesehenen Pendelarm 4 zusammen. In bezug auf die verwirklichte Maßnahme "Meßrohr 1 mit Pendelarm 4" wird auf die DE-OS 40 23 989 verwiesen. Im übrigen zeigen die Fig. 1, 2 und 4, daß das Meßrohr 1 noch mit Massekörpern 5 versehen ist, durch deren Masse und Anordnung die Eigenfrequenz des Meßrohrs 1 - in bestimmten Grenzen beeinflußt werden kann.

Für das Massendurchflußmeßgerät, von dem die Erfindung ausgeht, und für das erfindungsgemäße Massendurchflußmeßgerät gilt weiter, und zwar für alle Ausführungsbeispiele des erfindungsgemäßen Massendurchflußmeßgeräts, daß ein das Meßrohr 1, den Schwingungserzeuger 2, die Meßwertsensoren 3 und, soweit vorhanden, die Massekörper 5 aufnehmendes Tragrohr 6 und erfindungsgemäß zwei die Temperatur des Meßrohrs 1 erfassender Temperatursensor vorgesehen sind, wobei das Meßrohr 1 und das Tragrohr 6 in einer axiale Relativbewegungen ausschließenden Weise miteinander verbunden sind und der axiale Abstand der Verbindungsstellen Meßrohr 1 / Tragrohr 6 die Schwingungslänge des Meßrohrs 1 darstellt und wobei die die Temperatur des Meßrohrs 1 erfassenden Temperatursensoren 7 der meßrohrtemperaturabhängigen Korrektur des Meßwerts dienen.

Bei allen dargestellten Ausführungsbeispielen erfindungsgemäßer Massendurchflußmeßgeräte ist das Meßrohr 1 über zwei endseitig an das Tragrohr 6 angeschlossene Verbindungsringe 8 mit dem Tragrohr 6 verbunden. Im übrigen ist jeweils ein äußerer Aufnahmezylinder 9 vorgesehen, der die Baueinheit aus dem Meßrohr 1, dem Schwingungserzeuger 2, den Meßwertsensoren 3, dem Pendelarm 4, den Massekörpern 5, soweit vorgesehen, dem Tragrohr 6 und den Verbindungsringen 8 aufnimmt. Dabei weist der Aufnahmezylinder 9 zwei endseitig angeschlossene Verbindungsringe 10 auf, an die jeweils ein nach außen ragender Anschlußflansch 11 angeschlossen ist. Mit dem Meßrohr 1 verbundene Anschlußrohre 12 ragen durch die Verbindungsringe 10 in die Anschlußflanschen 11. Zweckmäßigerweise sind das Meßrohr 1 und die Anschlußrohre 12 einstückig ausgeführt; es handelt sich also um ein insgesamt durchgehendes Rohr. Zum Schutz der Anschlußrohre 12 sind diese jeweils mit einem Verstärkungszylinder 13 ummantelt.

In bezug auf das Meßrohr 1, das Tragrohr 6, die Verbindungsringe 8, den Aufnahmezylinder 9, die Verbindungsringe 10, die Anschlußflansche 11, die Anschlußrohre 12 und die Verstärkungszylinder 13 und in bezug auf die Verbindung dieser Bauteile miteinander wird auf die DE-OS 41 24 295 verwiesen.

Gemäß einer Ausgestaltung der Erfindung ist nun ein Änderungen der Schwingungslänge des Meßrohrs 1 erfassender Längenänderungssensor 14 - zur schwingungslängen- und spannungsabhängigen Korrektur des Meßwerts - vorgesehen. Daß dadurch und in welcher Weise dadurch alle die Schwingungsfrequenz des Meßrohrs ändernden Einflüsse berücksichtigt und damit alle daraus resultierenden Meßfehler praktisch vollkommen eliminiert werden können, ist bereits im einzelnen dargestellt worden.

In den Figuren ist nicht dargestellt, wie die von den Temperatursensoren 7 erzeugten Temperatursensorsignale und die vom Längenänderungssensor 14 erzeugten Längenänderungssensorsignale verarbeitet werden. Dazu gibt es verschiedene Möglichkeiten. Einmal besteht die Möglichkeit, von den Temperatursensoren 7 erzeugte Temperatursensorsignale in eine erste Korrekturschaltung und vom Längenänderungssensor 14 erzeugte Längenänderungssensorsignale in eine zweite Korrekturschaltung zu geben und die Korrektursignale beider Korrekturschaltungen in einer Auswerteschaltung den dort aus den Meßwertsensorsignalen gewonnenen Meßwert korrigieren zu lassen. Es besteht auch die Möglichkeit, die von den Temperatursensoren 7 erzeugten Temperatursensorsignale und die vom Längenänderungssensor 14 erzeugten Längenänderungssensorsignale in eine einzige Korrekturschaltung zu geben und das Korrektursignal der Korrekturschaltung in einer Auswerteschaltung den dort aus den Meßwertsensorsignalen gewonnenen Meßwert korrigieren zu lassen. Schließlich besteht auch die Möglichkeit, die von den Temperatursensoren 7 erzeugten Temperatursensorsignale und die vom Längenänderungssensor 14 erzeugten Längenänderungssensorsignale in eine Korrektur- und Auswerteschaltung zu geben und den dort aus den Meßwertsensorsignalen gewonnenen Meßwert korrigieren zu lassen.

Insbesondere in bezug auf die Realisierung des Längenänderungssensors 14 gibt es verschiedene Möglichkeiten; einzelne dieser Möglichkeiten sind bei den in den Figuren dargestellten Ausführungsbeispielen des erfindungsgemäßen Massendurchflußmeßgeräts verwirklicht.

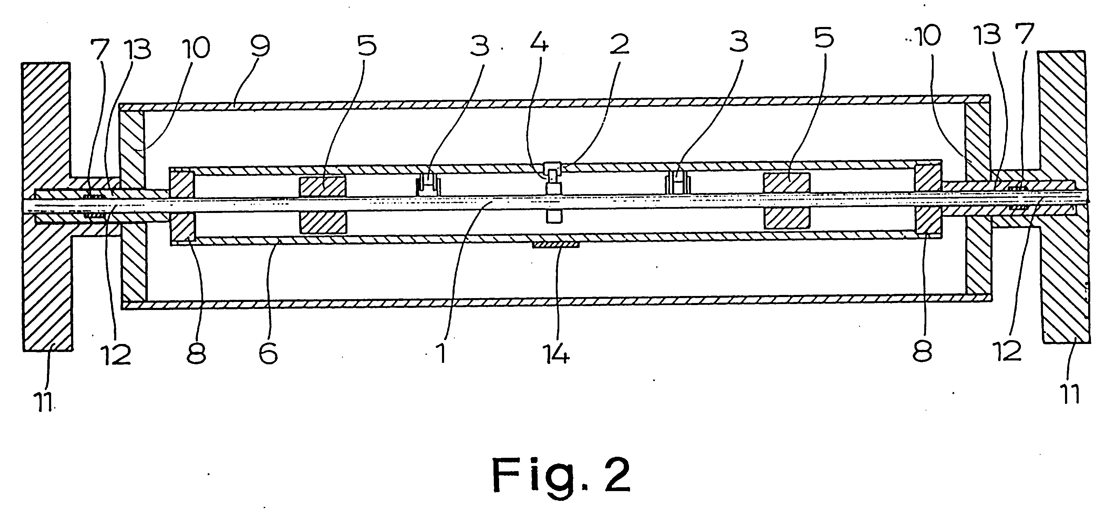

In den Ausführungsbeispielen erfindungsgemäßer Massendurchflußmeßgeräte, die in den Fig. 1 und 2 dargestellt sind, ist der Längenänderungssensor 14 jeweils als Dehnungsmeßstreifen ausgeführt. Im Ausführungsbeispiel nach Fig. 1 ist der als Dehnungsmeßstreifen ausgeführte Längenänderungssensor 14 auf dem Meßrohr 1 selbst angebracht. Da das Meßrohr 1 und das Tragrohr 6 in einer axiale Relativbewegungen ausschließenden Weise miteinander verbunden sind, kann der als Dehnungsmeßstreifen ausgeführte Längenänderungssensor 14 auch auf dem Tragrohr 6 angebracht sein; dieses Ausführungsbeispiel zeigt Fig. 2.

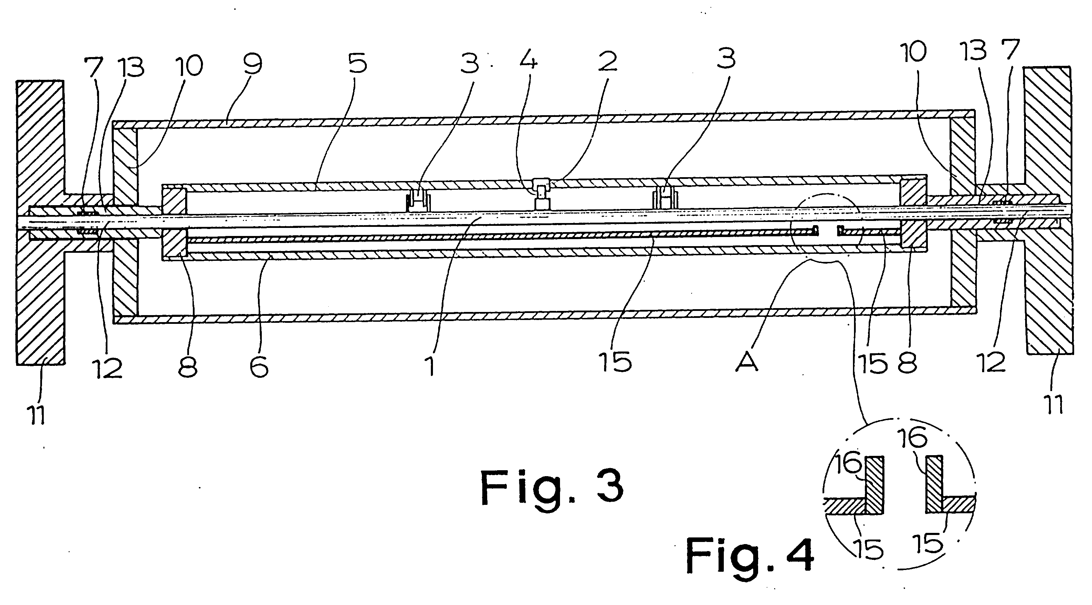

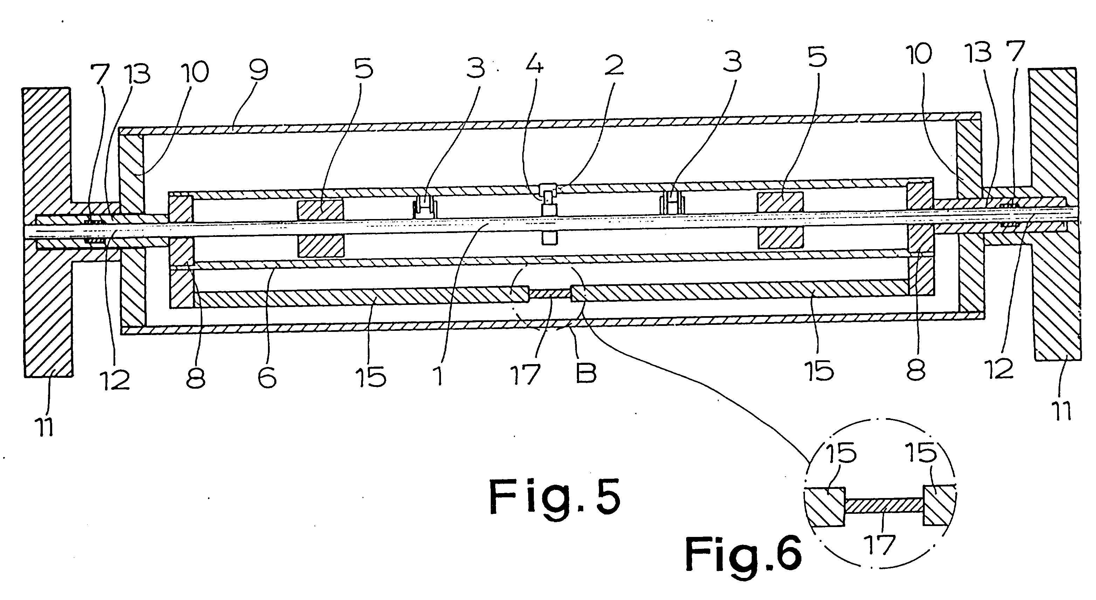

Bei den Ausführungsbeispielen erfindungsgemäßer Massendurchflußmeßgeräte, die Fig. 3 (mit Fig. 4) und Fig. 5 (mit Fig. 6) zeigen, weist der Längenänderungssensor 14 zwei Längenänderungsdetektorstäbe 15 auf, die aus einem Werkstoff mit einem besonders niedrigen Ausdehnungskoeffizienten bestehen. Der niedrige Ausdehnungskoeffizient führt dazu, daß eine temperaturabhängige Längenänderung der Längenänderungsdetektoren 15 die Messung der Änderungen der Schwingungslänge des Meßrohrs 1 praktisch nicht beeinflußt. Auch bei dieser Ausführungsform des Längenänderungssensors 14 kann dieser innerhalb des Tragrohrs 6, wie in Fig. 3 dargestellt, oder außerhalb des Tragrohrs 6, wie in Fig. 5 dargestellt, verwirklicht sein.

Wie Fig. 4 in einzelnen zeigt, sind im Ausführungsbeispiel nach Fig. 3 die einander zugewandten Enden der Längenänderungsdetektorstäbe 15 mit Kondensatorplatten 16 versehen. Bei diesem Ausführungsbeispiel wird also eine Längenänderung über eine Kapazitätsänderung gemessen. Demgegenüber zeigt Fig. 6 für das Ausführungsbeispiel nach Fig. 5, daß zwischen den einander zugewandten Enden der Längenänderungsdetektorstäbe 15 ein Dehnungsmeßstreifen 17 vorgesehen ist. In diesem Ausführungsbeispiel wird also eine Längenänderung über eine Widerstandsänderung des Dehnungsmeßstreifens 17 festgestellt.

Schließlich sei noch darauf hingewiesen, daß in allen dargestellten Ausführungsbeispielen erfindungsgemäßer Massendurchflußmeßgeräte zwei als temperaturabhängige Widerstände, vorzugsweise Pt-1000, ausgeführte Temperatursensoren 7 vorgesehen sind, und zwar jeweils an den beidseitig des Meßrohrs 1 vorgesehenen Anschlußrohren 12.

## Patentansprüche

1. Massendurchflußmeßgerät für strömende Medien, das nach dem Coriolis-Prinzip arbeitet, mit mindestens einem das strömende Medium führenden geraden Meßrohr, mit mindestens einem auf das Meßrohr einwirkenden Schwingungserzeuger, mit mindestens einem Coriolis-Kräfte und/oder auf Coriolis-Kräften beruhende Coriolis-Schwingungen erfassenden Meßwertsensor und mit einem das Meßrohr, den Schwingungserzeuger und den Meßwertsensor aufnehmenden Tragrohr wobei das Meßrohr und das Tragrohr in einer axiale Relativbewegungen ausschließenden Weise miteinander verbunden sind und der axiale Abstand der Verbindungsstellen Meßrohr/ Tragrohr die Schwingungslänge des Meßrohrs darstellt, **dadurch gekennzeichnet,** daß zur meßrohrtemperaturabhängigen Korrektur des Meßwerts an beiden Enden des Meßrohrs oder an beiden mit dem Meßrohr verbundenen Anschlußrohren jeweils ein - vorzugsweise als temperaturabhängiger Widerstand ausgeführter - Temperatursensor vorgesehen ist und die beiden Temperatursensoren in Reihe geschaltet sind.

2. Massendurchflußmeßgerät nach Anspruch 1, dadurch gekennzeichnet, daß ein Änderungen der Schwingungslänge des Meßrohrs (1) erfassender Längenänderungssensor (14) - zur schwingungslängen- und spannungsabhängigen Korrektur des Meßwerts - vorgesehen ist.

3. Massendurchflußmeßgerät nach Anspruch 2, dadurch gekennzeichnet, daß von den Temperatursensoren (7) erzeugte Temperatursensorsignale in eine erste Korrekturschaltung und vom Längenänderungssensor (14) erzeugte Längenänderungssensorsignale in eine zweite Korrekturschaltung gegeben werden und die Korrektursignale beider Korrekturschaltungen in einer Auswerteschaltung den dort aus den Meßwertsensorsignalen gewonnenen Meßwert korrigieren.

4. Massendurchflußmeßgerät nach Anspruch 2, dadurch gekennzeichnet, daß von den Temperatursensoren (7) erzeugte Temperatursensorsignale und vom Längenänderungssensor (14) erzeugte Längenänderungssensorsignale in eine einzige Korrekturschaltung gegeben werden und das Korrektursignal der Korrekturschaltung in einer Auswerteschaltung den dort aus den Meßwertsensorsignalen gewonnenen Meßwert korrigieren.

5. Massendurchflußmeßgerät nach Anspruch 2, dadurch gekennzeichnet, daß von den Temperatursensoren (7) erzeugte Temperatursensorsignale und vom Längenänderungssensor (14) erzeugte Längenänderungssensorsignale in eine Korrektur- und Auswerteschaltung gegeben werden und den dort aus den Meßwertsensorsignalen gewonnenen Meßwert korrigieren.

6. Massendurchflußmeßgerät nach einem der Ansprüche 2 bis 5, dadurch gekennzeichnet, daß der Längenänderungssensor (15) als Dehnungsmeßstreifen ausgeführt ist.

7. Massendurchflußmeßgerät nach Anspruch 6, dadurch gekennzeichnet, daß der als Dehnungsmeßstreifen ausgeführte Längenänderungssensor (14) auf dem Meßrohr (1) angebracht ist.

8. Massendurchflußmeßgerät nach Anspruch 6, dadurch gekennzeichnet, daß der als Dehnungsmeßstreifen ausgeführte Längenänderungssensor (14) auf dem Tragrohr (6) angebracht ist.

9. Massendurchflußmeßgerät nach einem der Ansprüche 2 bis 5, dadurch gekennzeichnet, daß der Längenänderungssensor (14) mindestens einen Längenänderungsdetektorstab (15), vorzugsweise zwei Längenänderungsdetektorstäbe (15), aufweist.

10. Massendurchflußmeßgerät nach Anspruch 9, dadurch gekennzeichnet, daß der Längenänderungsdetektorstab (15) bzw. die Längenänderungsdetektorstäbe (15) aus einem Werkstoff mit einem besonders niedrigen Ausdehnungskoeffizienten besteht bzw. bestehen.

11. Massendurchflußmeßgerät nach Anspruch 9 oder 10, dadurch gekennzeichnet, daß der Längenänderungssensor (14) innerhalb des Tragrohrs (6) verwirklicht ist.

12. Massendurchflußmeßgerät nach Anspruch 9 oder 10, dadurch gekennzeichnet, daß der Längenänderungssensor (14) außerhalb des Tragrohrs (6) verwirklicht ist.

13. Massendurchflußmeßgerät nach einem der Ansprüche 9 bis 12, dadurch gekennzeichnet, daß die einander zugewandten Enden der Längenänderungsdetektorstäbe (15) mit Kondensatorplatten (16) versehen sind.

14. Massendurchflußmeßgerät nach einem der Ansprüche 9 bis 12, dadurch gekennzeichnet, daß zwischen den Längenänderungsdetektorstäben (15) ein Dehnungsmeßstreifen (17) vorgesehen ist.

## Claims

1. Mass flow meter for flowing media which operates on the Coriolis principle, having at least one straight measuring tube, which carries the flowing medium, having at least one vibration generator acting on the measuring tube, having at least one measured-value sensor, which detects Coriolis forces and/or Coriolis vibrations based on Coriolis forces, and having a supporting tube which accommodates the measuring tube, the vibration generator and the measured-value sensor, the measuring tube and the supporting tube being connected to one another in a manner which prevents axial relative motion, and the axial distance between the points of connection between the measuring tube and the supporting tube representing the vibrational length of the measuring tube, characterized in that, for correction of the measured value as a function of the temperature of the measuring tube, a temperature sensor - preferably embodied as a temperature-dependent resistor - is provided at each end of the measuring tube or on each connection tube connected to the measuring tube, and the two temperature sensors are connected in series.

2. Mass flow meter according to Claim 1, characterized in that a length-change sensor (14) which detects changes in the vibrational length of the measuring tube (1) is provided to correct the measured value as a function of the vibrational length and stress.

3. Mass flow meter according to Claim 2, characterized in that temperature-sensor signals produced by the temperature sensors (7) are input into a first correction circuit and length-change sensor signals produced by the length-change sensor (14) are input into a second correction circuit, and the correction signals of the two correction circuits are used in an evaluation circuit to correct the measured value obtained there from the measured-value sensor signals.

4. Mass flow meter according to Claim 2, characterized in that temperature-sensor signals produced by the temperature sensors (7) and length-change sensor signals produced by the length-change sensor (14) are input into a single correction circuit, and the correction signal of the correction circuit is used in an evaluation circuit to correct the measured value obtained there from the measured-value sensor signals.

5. Mass flow meter according to Claim 2, characterized in that temperature-sensor signals produced by the temperature sensors (7) and length-change sensor signals produced by the length-change sensor (14) are input into a correction and evaluation circuit and are used to correct the measured value obtained there from the measured-value sensor signals.

6. Mass flow meter according to one of Claims 2 to 5, characterized in that the length-change sensor (15) is embodied as a strain gauge.

7. Mass flow meter according to Claim 6, characterized in that the length-change sensor (14) embodied as a strain gauge is mounted on the measuring tube (1).

8. Mass flow meter according to Claim 6, characterized in that the length-change sensor (14) embodied as a strain gauge is mounted on the supporting tube (6).

9. Mass flow meter according to one of Claims 2 to 5, characterized in that the length-change sensor (14) has at least one length-change detector rod (15), preferably two length-change detector rods (15).

10. Mass flow meter according to Claim 9, characterized in that the length-change detector rod (15) or length-change detector rods (15) is or are composed of a material with a particularly low coefficient of expansion.

11. Mass flow meter according to Claim 9 or 10, characterized in that the length-change sensor (14) is implemented inside the supporting tube (6).

12. Mass flow meter according to Claim 9 or 10, characterized in that the length-change sensor (14) is implemented outside the supporting tube (6).

13. Mass flow meter according to one of Claims 9 to 12, characterized in that the mutually facing ends of the length-change detector rods (15) are provided with capacitor plates (16).

14. Mass flow meter according to one of Claims 9 to 12, characterized in that a strain gauge (17) is provided between the length-change detector rods (15).

## Revendications

1. Débitmètre massique pour des milieux qui s'écoulent, qui travaille conformément au principe de Coriolis, comprenant au moins un tube de mesure rectiligne guidant le milieu qui s'écoule, au moins un générateur de vibrations agissant sur le tube de mesure, au moins un détecteur de la valeur de mesure enregistrant les forces de Coriolis et/ou les vibrations de Coriolis se basant sur les forces de Coriolis, un tube de support dans lequel viennent se loger le tube de mesure, le générateur de vibrations et le détecteur de la valeur de mesure, dans lequel le tube de mesure et le tube de support sont reliés l'un à l'autre d'une manière qui exclut des mouvements relatifs axiaux et la distance axiale entre les endroits de liaison tube de mesure/tube de support représente la longueur de la vibration du tube de mesure, caractérisé en ce qu'on prévoit, pour la correction de la valeur de mesure en fonction de la température du tube de mesure, aux deux extrémités du tube de mesure ou sur les deux tubes de raccord reliés au tube de mesure, respectivement un détecteur de la température - de préférence réalisé sous la forme d'une résistance dépendant de la température - et on monte les deux détecteurs de la température en série.

2. Débitmètre massique selon la revendication 1, caractérisé en ce qu'on prévoit un détecteur (14) de la modification de la longueur enregistrant des modifications de la longueur de la vibration du tube de mesure (1) - pour la correction de la valeur de mesure en fonction de la longueur de la vibration et de la tension -.

3. Débitmètre massique selon la revendication 2, caractérisé en ce que des signaux de détection de la température générés par le détecteur de la température (7) sont entrés dans un premier circuit de correction et des signaux de détection de la modification de la longueur générés par le détecteur (14) de la modification de la longueur sont entrés dans un second circuit de correction, les signaux de correction des deux circuits de correction corrigeant, dans un circuit d'évaluation, la valeur de mesure obtenue dans ce dernier à partir des signaux de détection de la valeur de mesure.

4. Débitmètre massique selon la revendication 2, caractérisé en ce que des signaux de détection de la température générés par le détecteur de la température (7) et des signaux de détection de la modification de la longueur générés par le détecteur (14) de la modification de la longueur sont entrés dans un circuit unique de correction, le signal de correction du circuit de correction corrigeant, dans un circuit d'évaluation, la valeur de mesure obtenue dans ce dernier à partir des signaux de détection de la valeur de mesure.

5. Débitmètre massique selon la revendication 2, caractérisé en ce que des signaux de détection de la température générés par le détecteur de la température (7) et des signaux de détection de la modification de la longueur générés par le détecteur (14) de la modification de la longueur sont entrés dans un circuit de correction et d'évaluation, et corrigent la valeur de mesure obtenue dans ce dernier à partir des signaux de détection des valeurs de mesure.

6. Débitmètre massique selon l'une quelconque des revendications 2 à 5, caractérisé en ce que le détecteur (14) de la modification de la longueur est réalisé sous forme d'un extensomètre à fil d'acier.

7. Débitmètre massique selon la revendication 6, caractérisé en ce que le détecteur (14) de la modification de la longueur réalisé sous forme d'un extensomètre à fil d'acier est appliqué sur le tube de mesure (1).

8. Débitmètre massique selon la revendication 6, caractérisé en ce que le détecteur (14) de la modification de la longueur réalisé sous forme d'un extensomètre à fil d'acier est appliqué sur le tube de support (6).

9. Débitmètre massique selon l'une quelconque des revendications 2 à 5, caractérisé en ce que le détecteur (14) de la modification de la longueur présente au moins une barre (15) de détection de modifications de la longueur, de préférence deux barres (15) de détection de modifications de la longueur.

10. Débitmètre massique selon la revendication 9, caractérisé en ce que la barre (15) de détection de la modification de la longueur, respectivement les barres (15) de détection de modifications de la longueur est, respectivement sont constituées par un matériau possédant un coefficient de dilatation particulièrement faible.

11. Débitmètre massique selon la revendication 9 ou 10, caractérisé en ce que le détecteur (14) de la modification de la longueur est réalisé à l'intérieur du tube de support (6).

12. Débitmètre massique selon la revendication 9 ou 10, caractérisé en ce que le détecteur (14) de la modification de la longueur est réalisé à l'extérieur du tube de support (6).

13. Débitmètre massique selon l'une quelconque des revendications 9 à 12, caractérisé en ce que les extrémités tournées l'une vers l'autre des barres (15) de détection de modifications de la longueur sont munies de plaques de condensateurs (16).

14. Débitmètre massique selon l'une quelconque des revendications 9 à 12, caractérisé en ce qu'on prévoit un extensomètre à fil d'acier (17) entre les barres (15) de détection de modifications de la longueur.
